## Europäisches Patentamt
## European Patent Office
## Office européen des brevets

(11) Numéro de publication: **0 060 192**
**B1**

(12) **FASCICULE DE BREVET EUROPEEN**

(45) Date de publication du fascicule du brevet: **19.06.85**

(21) Numéro de dépôt: **82400372.7**

(22) Date de dépôt: **04.03.82**

(51) Int. Cl.⁴: $B\ 05\ B\ 7/10$, $F\ 26\ B\ 3/12$, $B\ 01\ D\ 1/18$, $B\ 01\ J\ 19/26$

(54) **Dispositif pour la mise en contact de substances se présentant dans des phases différentes, l'une au moins étant gazeuse.**

(30) Priorité: **13.03.81 FR 8105032**

(43) Date de publication de la demande:
**15.09.82 Bulletin 82/37**

(45) Mention de la délivrance du brevet:
**19.06.85 Bulletin 85/25**

(84) Etats contractants désignés:
**AT BE CH DE FR GB IT LI LU NL SE**

(56) Documents cités:
**EP-A-0 007 846**
**FR-A-2 257 326**
**FR-A-2 439 037**
**GB-A- 672 441**
**US-A-2 413 420**
**US-A-2 469 553**

(73) Titulaire: **RHONE-POULENC SPECIALITES CHIMIQUES**
**"Les Miroirs" 18, Avenue d'Alsace**
**F-92400 Courbevoie (FR)**

(72) Inventeur: **Hess, Raoul**
**19, avenue Gabriel Péri**
**F-92320 Châtillon sous Bagneux (FR)**
Inventeur: **Mirabel, Bernard**
**4, rue Louis Bonin**
**F-94310 Orly (FR)**

(74) Mandataire: **Martin, Henri et al**
**RHONE-POULENC RECHERCHES Service Brevets Chimie et Polymères 25, quai Paul Doumer**
**F-92408 Courbevoie Cedex (FR)**

Courier Press, Leamington Spa, England.

EP 0 060 192 B1

# Description

La présente invention a trait pour la mise en contact de substances se présentant dans des phases différentes, l'une au moins étant gazeuse.

Elle s'applique en particulier au cas du séchage.

On a revendiqué dans le brevet français 2 257 326 un nouveau procédé de mise en contact de substances se présentant dans des phases différentes l'une étant gazeuse, pouvant renfermer des particules solides ou liquides, l'autre étant sous forme dispersable telle que liquide, solution ou suspension, éventuellement solide, telle que pulvérulente.

Le procédé selon le FR—A—2 257 326 consiste:

— à former un écoulement puits-tourbillon avec la phase gazeuse,

— à amener la phase dispersable dans la zone de dépression de l'écoulement puits-tourbillon,

— à impartir à la phase gazeuse une quantité de mouvement grande par rapport à celle de la phase dispersable, suffisante pour provoquer à la fois la dispersion de la phase dispersable et sa prise en charge de manière à provoquer son traitement.

On forme ainsi une zone de type à écoulement piston à partir du contact des phases et l'on obtient un traitement régulier et instantané de la phase dispersable qui constitue généralement la phase à traiter. Le traitement est de type flash c'est-à-dire très court et peut s'accompagner d'un fort écart de température entre les phases.

Ce procédé présente beaucoup d'avantages tant du point de vue de la granulométrie, finesse, spectre de répartition étroit, que du traitement homogénéité de traitement, d'une particule à l'autre, rapidité du traitement. L'on conçoit aisément qu'il est très exigeant quant à sa mise en oeuvre.

Dans le FR—A—2 257 326 l'on décrit et revendique divers moyens pour produire le mouvement tangentiel en introduisant tangentiellement la phase gazeuse par rapport à la phase dispersable ou en disposant une bande hélicoïdale ou des ailettes déflectrices autour d'une tubulure centrale servant à guider la phase dispersable.

Mais un problème important réside dans la qualité de la symétrie de l'écoulement. C'est pourquoi dans le même brevet français FR—A—2 257 326 l'on a revendiqué un système de répartition multitangentiel constitué par un espace annulaire alimenté par au moins une entrée tangentielle et délimitée vers l'intérieur du dispositif par une paroi perforée, chaque perforation jouant le rôle d'une entrée tangentielle.

Ce dispositif a conduit à une qualité satisfaisante de l'écoulement dans beaucoup de cas.

Malheureusement l'on a observé dans certaines applications des dépôts de produits collants sur les parois de la chambre de contact.

Certains problèmes ont pu être résolus en créant une zone de refroidissement au niveau de la zone de contact comme décrit le FR—A—2 422 435, on a aussi songé à améliorer la qualité en jouant sur les paramètres possibles du dispositif: forme des trous, dispositions, etc. . . .

De manière expérimentale l'on observe que deux paramètres sont importants: la vitesse de rotation de l'écoulement hélicoïdale et sa vitesse d'avancement linéaire, vitesse de "descente" le dispositif étant généralement placé verticalement. Or ces facteurs varient selon la nature du produit à traiter, en fait selon la rhéologie de la phase dispersable. Il s'ensuit que pour êntre satisfaisante toute solution doit être adaptable facilement.

Or maintenant l'on a trouvé et c'est ce qui fait l'ojet de la présente invention une manière simple de résoudre le problème et qui consiste à interposer un guide réglable sur le trajet de l'écoulement hélicoïdal avant son contact avec l'autre phase.

Le dispositif selon l'invention présente:

— corps (1) pourvu d'au moins une chemise perforée (2) définissant un espace annulaire (3) dans lequel débouche au moins une entrée tangentielle (4), et un passage restreint de sortie (6),

— au moins un conduit (5) débouchant au niveau du passage restreint plus au moins le rayon de la section dudit passage, et se caractérise par le fait qu'il comporte au moins un guide d'écoulement réglable (7) en amont du passage restreint de sortie (6), à l'intérieur de la chemise perforée (2) autour du conduit (5).

De cette manière, le guide (7) se trouve sur le trajet de l'écoulement hélicoïdal.

Le guide 7 peut présenter des formes diverses. De manière simple il est constitué par au moins une couronne munie d'ailettes orientables.

De cette manière il suffit de régler l'inclinaison des ailettes pour obtenir la régulation de l'écoulement.

Ce guide 7 peut également être monté de manière à pouvoir coulisser le long du conduit 5. On peut aussi prévoir plusieurs guides tel que 7.

Le corps 1 est constitué par une enveloppe telle que de révolutions, cylindrique ou torique, mais on ne sortirait pas du cadre de la présente invention en lui conférant une forme telle que l'espace annulaire 3 soit à section décroissante ou croissante.

La paroi perforée 2 est à symétrie de révolution de sorte à obtenir un écoulement bien symétrique.

Le dispositif selon l'invention comprend en outre, en général une chambre de contact 8 et un cyclone 9 servant à la séparation des phases.

La chambre de contact 8 peut être constituée par un bicône ou par une enceinte cylindrique ou de toute forme adéquate.

Le dispositif selon l'invention permet de mettre en oeuvre le procédé selon le FR—A—2 257 326 c'est-à-dire que l'on introduit par le ou les entrées tangentielles 4, une phase gazeuse constituée par un gaz portant ou non des particules solides ou liquides.

Par le ou les conduits 5, la phase dispersible, éventuellement une phase gazeuse et que l'on impartit aux deux phases des quantités de mouvement telles, que le rapport de la quantité de mouvement de la phase gazeuse à la phase dispersible est d'au moins cent, de préférence comprise entre 1 000 et 10 000.

La vitesse de la phase dispersible est faible, inférieure à 10 m/sec. de préférence inférieure à 5 m/sec.

De même la pression sur la phase gazeuse est réduite, inférieure à $10^5$Pa, généralement comprise entre 0,4 et 0,6 $10^5$Pa. Ces valeurs ne sont pas limitatives, elles correspondent à des conditions avantageuses de mise en oeuvre dans des circonstances normales de fonctionnement.

Le dispositif selon l'invention peut être mis en oeuvre pour le séchage de produits divers à partir de solutions ou de suspensions. Il peut également être utilisé en réacteur chimique. On peut en particulier, réaliser une prédispersion comme indiqué dans la demande FR—A—2 490 619, ou réaliser une co-pulvérisation avec un réactif chimique comme dans la demande FR—A—2 490 619.

Mais comme dit précédemment la présente invention trouve son intérêt avec certaines applications conduisant au dépôt de matières dans la chambre de contact.

Alors que l'on pensait que l'introduction d'un guide conduise à certains inconvènients, comme perte de charge, effet défavorable sur le rendement (voir Perry et Chilten Chemical Engineer's Handbook — 5° Edition — 20—86 — McGraw-Hill Book Company) ce guide permet de manière simple de résoudre le problème. On observe en effet que selon l'angle d'inclinaison des ailettes le dépôt a lieu en haut ou en bas de la chambre de contact, ou disparaît, ce que est l'effet recherché.

Ainsi l'homme de l'art sans avoir à entrer dans une mise au point laborieuse peut déterminer les conditions de marche du dispositif, grâce à quelques essais de routine, ce qui par ailleurs lui permet d'utiliser le même dispositif pour des solutions ou suspension de rhéologies différentes, sans pièces supplémentaires au prix d'un simple réglage.

Mais la présente invention sera plus aisément comprise à l'aide des exemples suivants donnés à titre indicatif mais nullement limitatif.

Le dispositif utilisé est celui illustré sur les figures.

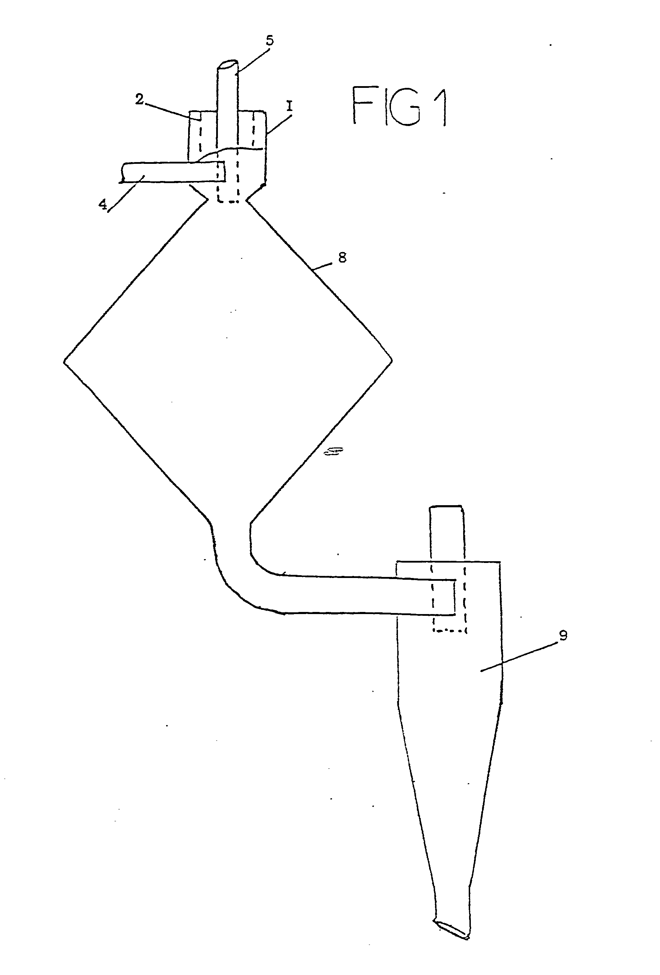

La figure 1 donne une vue générale de l'appareillage mis en oeuvre, comprenant un dispositif selon l'invention, une chambre de contact et un cyclone.

La figure 2 illustre de manière plus détaillée un dispositif selon l'invention.

La figure 3 représente un dispositif avec une chemise perforée à sa partie supérieure, mais sans guide d'écoulement.

La figure 4 schématise un dispositif selon la figure 3, comprenant en outre un pré-panier perforé (10).

La figure 5 représente un guide à deux rangées d'ailettes et la figure 6 à une rangée d'ailettes et pré-panier perforé.

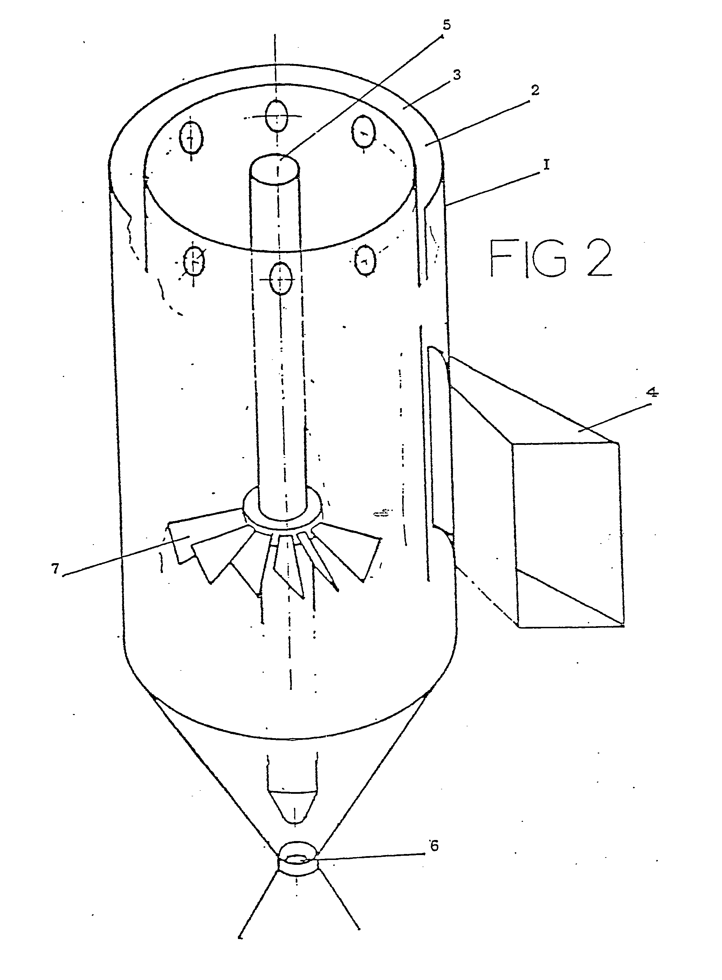

Un mode de réalisation du dispositif selon l'invention est plus particulièrement illustré à la figure 2.

Ce dispositif comprend un corps (1), une chemise perforée (2), le corps (1) et la chemise perforée (2) définissant un espace annulaire (3). Une entrée tangentielle (4) permet l'introduction d'un fluide gazeux dans l'espace annulaire (3), lequel fluide pénètre ensuite autour d'un conduit (5) à l'intérieur du dispositif où il prend le forme d'un écoulement tourbillon symétrique, avant de devenir puits en passant par le passage restreint de sortie (6).

Le réglage de l'écoulement est assuré par le guide réglable (7).

La solution test est une solution de protéines de lactosérum concentrées par ultrafiltration. Ces protéines sont particulièrement sensibles à la température.

Les exemples song effectués à partir de solutions de caractéristiques suivantes:

| — Extrait sec | 20 % |
|---|---|
| — Protéine | 65 % |
| — Lactose | 25 % |
| — pH | 5,35 % |

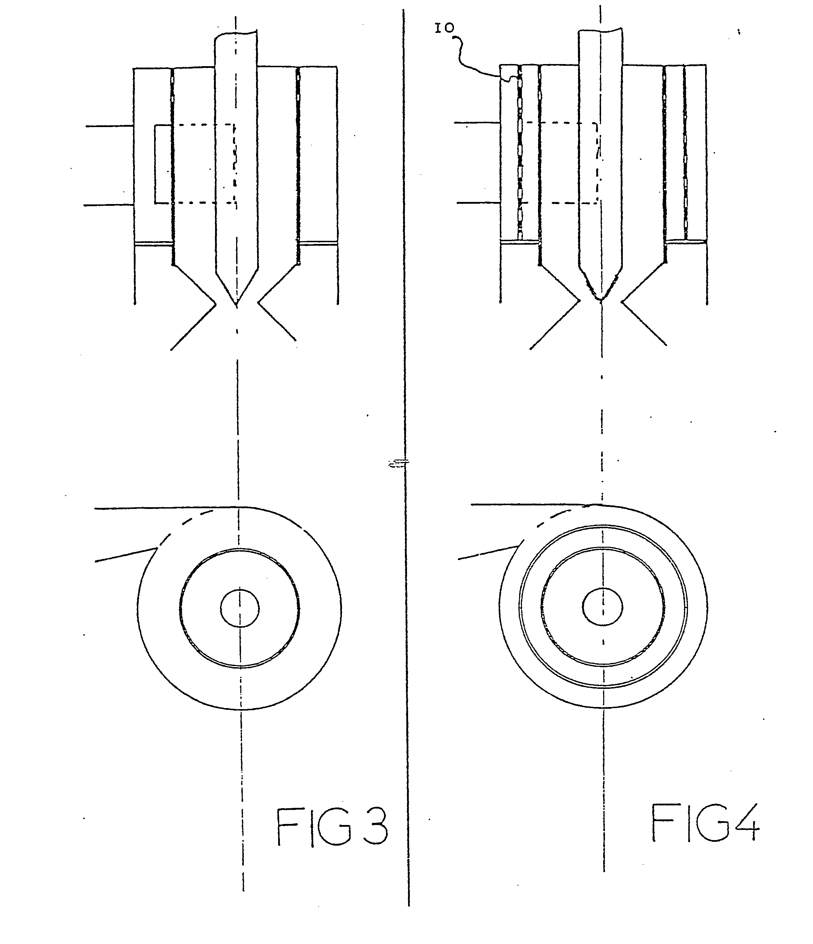

On a représenté aux figures 3 à 6 divers montages possibles.

La durée des essais est de 1 heure.

### Exemple 1

On fait appel à un dispositif tel que représenté figure 3 avec une chemise perforée à sa partie supérieure.

La solution ci-dessus est introduite à un débit de 80 l/h dans le dispositif.

La dispersion est obtenue par le seul effet tangentiel du gaz chaud (température d'entrée: 500°C; température de sortie: 120°C) qui est injecté à un débit d'environ 350 m3/h.

On observe un dépôt irrégulier sur le cône supérieur. L'épaisseur du dépôt varie de quelques millimètres (3 à 5) à quelques centimètres.

### Exemple 2

On essaie d'améliorer le montage avec un pré-panier perforé 10 situé entre l'arrivée tangentielle et le panier 2. On note une amélioration de la répartition mais encore un dépôt important sur le cône bas de 3 à 4 cm. (Figure 4).

### Exemple 3

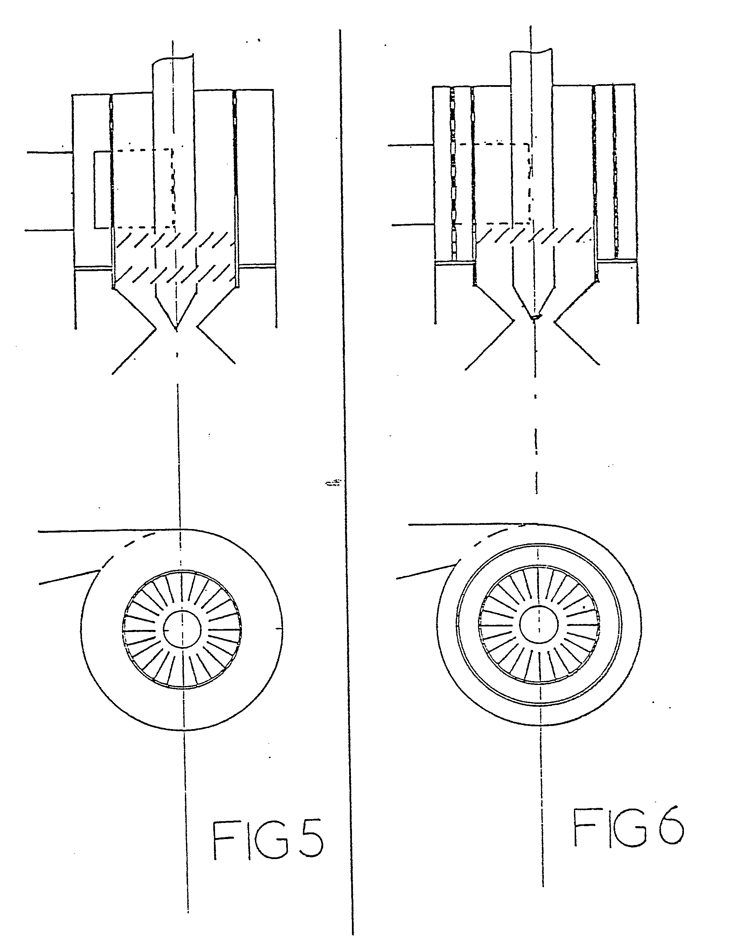

On rajoute un dispositif à ailettes 7 celles-ci étant inclinées à 45°C. Les ailettes reposent sur le diaphragme. L'effet tourbillonnaire est mauvais et l'on observe encore des dépôts irréguliers (Figure 5).

### Exemple 4

On remonte la position du dispositif 7. Le dépôt est de 3 mm sur le cône haut et l'on observe seulement des traces sur le cône bas.

### Exemple 5

On augmente l'inclinaison des ailettes à 75° et le dépôt devient plus faible sur le cône haut et augmente sur le cône Bas.

Ces exemples illustrent bien l'intérêt de l'invention. En effet, il est difficile pratiquement, et cher, d'améliorer l'écoulement à partir des paniers perforés.

On voit qu'avec un écoulement au départ imparfait, selon l'invention, et de manière très empirique par quelques réglages portant sur l'inclinaison des ailettes et leur emplacement, l'on parvient à un excellent résultat.

Ces exemples ne sont pas limitatifs et on peut encore prévoir par exemple plusieurs rangées d'ailettes comme à la figure 5.

**Revendications**

1. Dispositif pour la mise en contact de substances se présentant dans des phases différentes, l'une au moins étant gazeuse selon le procédé qui consiste:

— à former un écoulement puits-tourbillon avec la phase gazeuse;

— à amener la phase dispersable dans la zone de dépression de l'écoulement puits-tourbillon;

— à impartir à la phase gazeuse une quantité de mouvement grande par rapport à celle de la phase dispersable, suffisante pour provoquer à la fois la dispersion de la phase dispersable et sa prise en charge de manière à provoquer son traitement;

présentant:

— un corps (1), pourvu d'au moins une chemise perforée (2) définissant un espace annulaire (3) dans lequel débouche au moins une entrée tangentielle (4) et un passage restreint de sortie (6);

— au moins un conduit (5) débouchant, au niveau du passage restreint plus ou moins le rayon de la section dudit passage, caractérisé par le fait qu'il comporte au moins un guide d'écoulement réglable (7) en amont du passage restreint de sortie (6), à l'intérieur de la chemise perforée (2) autour du conduit (5).

2. Dispositif selon la revendication 1, caractérisé par le fait que le guide d'écoulement réglable (7) est constitué par au moins une couronne munie d'ailettes orientables.

3. Dispositif selon l'une des revendications 1 et 2, caractérisé par le fait que le guide d'écoulement réglable (7) est monté de manière à pouvoir coulisser le long du conduit (5).

**Patentansprüche**

1. Vorrichtung zum In-Berührungbringen von Substanzen, die in unterschiedlichen Phasen vorliegen, von denen mindestens eine gasförmig ist, entsprechend dem Verfahren, das darin besteht, daß man

— eine spiralig sich verengende Gasströmung erzeugt,

— die dispergierbare Phase dem Unterdruckbereich der spiralig sich verengenden Gasströmung zuführt,

— des Gasphase einen mit Bezug auf den Bewegungsimpuls der dispergierbaren Phase großen Bewegungsimpuls verleiht, der ausreicht, um gleichzeitig die Verteilung der dispergierbaren Phase und ihre Übernahme zu bewirken, derart, daß ihre Behandlung hervorgerufen wird, umfassend:

— ein Gehäuse (1), versehen mit mindestens einem perforiertem Einsatz (2), der einen Ringraum (3) definiert, in den mindestens eine tangentiale Zuführung (4) mündet, sowie ein verengter Ausgang (6),

— mindestens eine Leitung (5), die auf dem Niveau des verengten Ausganges mündet plus oder minus den Radius dieses Ausganges, dadurch gekennzeichnet, daß sie mindestens einen einstellbaren Strömungsführer (7) oberhalb des verengten Ausganges (6), im Inneren des perforierten Einsatzes (2) um die Leitung (5) herum aufweist.

2. Vorrichtung nach Anspruch 1, dadurch gekennzeichnet, daß der regulierbare Strömungsführer (7) aus mindestens einem Kranz, versehen mit orientierbaren Flügeln, besteht.

3. Vorrichtung nach einem der Ansprüche 1 und 2, dadurch gekennzeichnet, daß der regulierbare Strömungsführer (7) so montiert ist, daß er entlang der Leitung (5) gleiten kann.

**Claims**

1. Apparatus for contacting substances which are in different phases, one at least being gaseous, in accordance with the process which comprises:

— forming a vortical spinning flow with the gaseous phase;

— introducing the dispersable phase into the depression region of the vortical spinning flow;

— imparting to the gaseous phase a high level of momentum with respect to that of the dispersable phase, being sufficient to cause the dispersable phase to be dispersed and also taken in charge so as to provide for treatment thereof;

comprising:

— a body (1) which is provided with at least one perforated sleeve (2) defining an annular space (3) into which opens at least one tangential inlet (4) and a restricted outlet passage (6);

— at least one conduit (5) which opens at the level of the restricted passage plus or minus the radius of the section of said passage, characterised in that it comprises at least one adjustable flow guide (7) upstream of the restricted outlet passage (6) within the perforated sleeve (2) around the conduit (5).

2. Apparatus according to claim 1 characterised in that the adjustable flow guide (7) comprises at least one ring provided with orientable vanes.

3. Apparatus according to one of claims 1 and 2 characterised in that the adjustable flow guide (7) is so mounted as to be slidable along the conduit (5).

FIG 1

FIG 2

0 060 192

FIG 3

FIG 4

FIG 5

FIG 6